# EUROPEAN PATENT APPLICATION

(11) **EP 2 978 212 A1**
(43) Date of publication of application: **27.01.2016**
(21) Application number: 15178290.1
(22) Date of filing: 24.07.2015
(51) Int. Cl.: H04N 5/77, H04N 5/232

(54) **INFORMATION-PROCESSING DEVICE, INFORMATION-PROCESSING METHOD AND PROGRAM**

(30) Priority: 24.07.2014 JP 2014151138
(71) Applicant: Sintai Optical (Shenzhen) Co., Ltd., Shenzhen City Guangdong (CN); Asia Optical Co., Inc., Taichung City 427 (TW)
(72) Inventor: KANAI, Kunihiko, 427 Taichung City (TW); GOMI, Kazunori, 427 Taichung City (TW); MASUDA, Hiroshi, 427 Taichung City (TW)
(74) Representative: 2K Patentanwälte Blasberg Kewitz & Reichel

(57) **Abstract**

An information-processing device is provided which includes a control unit, a viewing angle change processing unit, an unfold method change processing unit, a memory unit, and a re-video data generation processing unit. The control unit displays an omnidirectional image data by an unfold image, which is unfolded with one of at least two unfold methods. The viewing angle change processing unit changes the viewing-angle position of the unfold image. The unfold method change processing unit changes the unfold method of the unfold image. The memory unit stores the viewing-angle position information changed by the viewing-angle position-changing operation, the unfold-method information changed by the unfold-method changing operation, and either the video time information or information relating to a video time which has been changed. The re-video data generation processing unit generates the re-video data from the omnidirectional data based on the information stored in the memory unit.

## Description

### CROSS REFERENCE TO RELATED APPLICATIONS

This Application claims priority of Japan Patent Application No. 2014-151138 filed on July 24, 2014, the entirety of which is incorporated by reference herein.

### BACKGROUND OF THE INVENTION

### Field of the Invention

The invention relates to an information-processing device, an information-processing method, and a program.

### Description of the Related Art

In well-known technologies for capturing video of expected images, a camera with a wide-angle lens (i.e. a fish-eye lens) capable of omnidirectional images, or a plurality of cameras, is utilized to take photographs for dedicated and high-quality images (panorama image). Users (the audience) select the expected audiovisual position, the viewing angle, and the lens position of the panorama image using general audiovisual terminals. By utilizing such technologies, different methods of viewing one content source can be implemented by the user. In addition, if the audiovisual two-dimensional position or viewing angle, the reproduction time, or the image lens information of the users is stored as a text log, the audiovisual experience of the users can be reproduced easily. For example, for a dynamic image-sharing source on the Internet, if the audiovisual experience is uploaded, the audiovisual experience of the user can be shared with others.

Regarding such technologies, by analyzing the audiovisual history information of a plurality of users, an imaging audiovisual history analyzing device is provided to automatically produce a digest image, which reflects the image-operating intention of the users (for example, as described in the Reference Document 1).

### The Prior Art

Reference Document 1: JP 2014-50068

### BRIEF SUMMARY OF THE INVENTION

### The Problem To Be Solved

Regarding the technology illustrated in Reference Document 1, the average values of the viewing angle information, the areal coordinates of the common frame region, and the common frame region are obtained from a plurality of audiovisual history information, and the audiovisual history information is obtained from the viewing angle information and the space position information of the frame. By utilizing the audiovisual recording information which is generated based on the average values, the digest image that reflects the image operating intention of the plurality of users can be automatically produced and performed.

However, regarding the technology illustrated in Reference Document 1, the audiovisual recording information and the specific dynamic image reproduction software to utilize the audiovisual recording information are necessary for the audiovisual digest images. The reproduction cannot be easily performed by utilizing general dynamic image reproduction software.

Furthermore, the premise of the digest image of the Reference Document 1 is the rectangular panorama image string only. The image operations for utilizing an image string which is displayed by several unfold methods that are different from the rectangular panorama images are not provided, and the intention of the user to operate images by utilizing various unfold methods cannot be reflected.

Each problem illustrated above is solved by the present invention. The image data can be easily generated or reproduced from omnidirectional image data which reflects the various operational intentions of users. The purpose of the present invention is to provide the information-processing device, the information-processing method, and the program for easily generating or reproducing image data.

### The Method For Solving The Problem

In one embodiment of the present invention, an information-processing device is provided. The information-processing device is characterized by a display control operation, a viewing-angle position-changing operation, an unfold-method changing operation, a memory-processing operation, and an image-data generating operation. The display control operation displays an omnidirectional image data by an unfold image which is unfolded with one of at least two unfold methods. The viewing-angle position-changing operation changes the viewing-angle position of the unfold image. The unfold-method changing operation changes the unfold method of the unfold image. The memory-processing operation stores the viewing-angle position information in a memory unit. The viewing-angle position information is changed by the viewing-angle position-changing operation, the unfold-method information changed by the unfold-method changing operation, and the video time information or information relating to the video time which has been changed. The image-data generating operation generates image data from the omnidirectional image data based on the stored unfold-method information, the viewing-angle position information, and either the video time information or the information relating to the video time.

In addition, it further includes a reproduction-instruction receipt operation for receiving a reproduction instruction from a user, and a reproduction operation for reproducing the image data after receiving the reproduction instruction from the user in the reproduction-instruction receipt operation.

In addition, it further includes a video-instruction receipt operation for receiving a video instruction from a user, wherein in the memory-processing operation, the image data which is generated by the image-data generating operation is stored in the memory unit after the video instruction from the user is received in the video-instruction receipt operation.

Furthermore, in one embodiment of the present invention, an information-processing method is provided. The information-processing method is executed by an information-processing device with a display control operation, a viewing-angle position-changing operation, an unfold-method changing operation, a memory-processing operation and an image-data generating operation. The information-processing method is characterized by a display control step for displaying an omnidirectional image data by an unfold image which is unfolded with one of at least two unfold methods; a viewing-angle position changing step for changing a viewing-angle position of the unfold image; an unfold method changing step for changing an unfold method of the unfold image; a memory processing step for storing, in a memory unit, the viewing-angle position information changed by the viewing-angle position-changing operation, the unfold-method information changed by the unfold-method changing operation, and either the video time information or information relating to a video time which has been changed; and an image-data generating step for generating image data from the omnidirectional image data based on the stored unfold-method information, the viewing-angle position information, and either the video time information or the information relating to the video time.

Furthermore, in one embodiment of the present invention, a program is provided. The program features a display control operation, a viewing-angle position-changing operation, an unfold-method changing operation, a memory-processing operation, and an image-data generating operation. The display control operation displays an omnidirectional image data by an unfold image which is unfolded with one of at least two unfold methods. The viewing-angle position-changing operation changes the viewing-angle position of the unfold image. The unfold-method changing operation changes the unfold method of the unfold image. The memory-processing operation saves, in a memory unit, the viewing-angle position information changed by the viewing-angle position-changing operation, the unfold-method information changed by the unfold-method changing operation, and either the video time information or information relating to a video time which has been changed. The image-data generating operation generates image data from the omnidirectional image data based on the saved unfold-method information, the viewing-angle position information, and either the video time information or the information relating to the video time.

Furthermore, in one embodiment of the present invention, an information-processing device is provided. The information-processing device features a display control operation for displaying a first image data by an unfold image which is unfolded with a determined unfold method; an input-instruction receipt operation for receiving an operation instruction from a user; a memory-processing operation for after the receiving by the input-instruction receipt operation, storing, in a memory unit, the viewing-angle position information relating to the unfold image, the determined unfold-method information, and the input instruction information according to the video time information or information relating to a video time; and an image-data generating operation for based on the input instruction information which is stored in the memory unit, generating a second image data which is based on a viewing-angle position, an unfold-method information, and a video time for a control processing of the first image data.

Furthermore, in one embodiment of the present invention, an information-processing device is provided. The information-processing device features a display control operation for displaying a first image data by an unfold image which is unfolded with one of at least two unfold methods; a viewing-angle position-changing operation for changing a viewing-angle position of the unfold image; an unfold-method changing operation for changing an unfold method of the unfold image; a memory-processing operation for storing, in a memory unit, the viewing-angle position information changed by the viewing-angle position-changing operation, the unfold-method information changed by the unfold-method changing operation, and the video time information or information relating to a video time which has been changed; and a reproduction operation for generating a second image data based on the information stored in the memory unit by the memory-processing operation.

In addition, the first image data is omnidirectional data which is characterized in each of the information-processing devices illustrated above.

In another embodiment, the information-processing device is characterized by an imaging device obtaining a first image data. The information-processing device comprises a communication unit, an input-instruction receipt unit, a control unit, a storing unit, an image-data generating unit and a display unit. The information-processing device displays the first image data obtained by the imaging device on the display unit. The communication unit executes communication for the imaging device or the storing unit. The input-instruction receipt unit receives an input instruction by a user through the control unit, forming an input-instruction information and storing the input-instruction information on the storing unit. The image-data generating unit generates a second image data from the first image data with the input-instruction information stored in the storing unit, and storing in the storing unit or an external storing unit through the input-instruction receipt unit.

In addition, the communication unit has wireless-communication technology. The display unit displays the first image data through an unfold method of at least two unfold methods. The control unit comprises an unfold-method changing unit changing unfold method of the first image data and a viewing-angle position -changing unit changing viewing-angle position of the first image data. The control unit comprises a video-instruction receipt unit receiving video-instruction of a user; a play-instruction receipt unit receiving play-instruction of a user; and a play unit, playing the second image data when the play-instruction receipt unit receives the play-instruction of the user.

An information-processing method is characterized by an imaging device obtaining a first image data. The information-processing method has the information-processing device which comprises a communication unit, an input-instruction receipt unit, a control unit, a storing unit, an image-data generating unit and a display unit, the information-processing device displays the first image data obtained by the imaging device on the display unit, and the information-processing method comprises a communication step, executing communication for the imaging device or the storing unit by the communication unit; an input-instruction receipt step, receiving an input instruction by a user through the control unit, forming an input-instruction information and storing the input-instruction information on the storing unit by the input-instruction receipt unit; and an image-data generating step, generating a second image data from the first image data based on the input-instruction information stored in the storing unit, and storing in the storing unit or an external storing unit through the input-instruction receipt unit by input-instruction receipt unit.

The information-processing method comprises a video-instruction receipt step for executing video-instruction by a user through a video-instruction receipt unit. The information-processing method comprises a play-instruction receipt step for executing play-instruction by a user through a play-instruction receipt unit and playing the second image data when the play-instruction receipt unit receives the play-instruction through the play unit. The information-processing method comprises a unfold-method changing step for changing unfold method of the first image data by a user through an unfold-method changing unit. The information-processing method comprises a viewing-angle position-changing step for changing viewing-angle position of the first image data by a user through a viewing-angle position-changing unit.

### The Effect Of The Present Invention

The image data can be easily generated or reproduced from omnidirectional image data that reflects various operational intentions of the user. The purpose of the present invention is to provide an information-processing device, an information-processing method, and a program for easily generating or reproducing image data.

### BRIEF DESCRIPTION OF DRAWINGS

The invention can be more fully understood by reading the subsequent detailed description and examples with references made to the accompanying drawings, wherein:
FIG.1 illustrates a block diagram of the information-processing device 1 according to an embodiment of the present invention;
FIG.2 is a flowchart illustrating the generation processing of the re-video data by the control unit 13 of the information-processing device 1 shown in FIG.1;
FIG.3 is an example of an image illustrated in the display unit 15 when the re-video process of FIG.2 is performed;
FIG.4 is an example of an image illustrated in the display unit 15 when the re-video process of FIG.2 is performed;
FIG.5 is an example of an image illustrated in the display unit 15 when the re-video process of FIG.2 is performed;
FIG.6 is an example of an image illustrated in the display unit 15 when the re-video process of FIG.2 is performed.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF THE INVENTION

In order to illustrate the purposes, features and advantages of the invention, the embodiments and figures of the invention are shown in detail as follows. This description is made for the purpose of illustrating the general principles of the invention and should not be taken in a limiting sense. It should be understood that the embodiments may be realized in software, hardware, firmware, or any combination thereof.

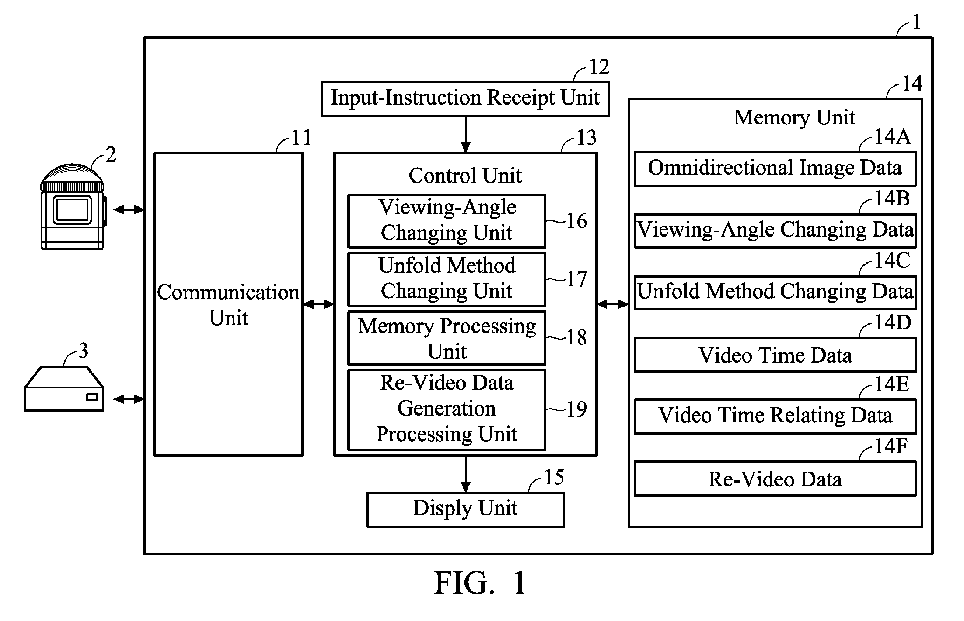

FIG.1 illustrates a block diagram of the information-processing device 1 according to an embodiment of the present invention. The information-processing device 1 is arranged in a computer such as a smartphone, a tablet terminal, a notebook-type computer, a desktop computer, or a PDA (Personal Data Assistant). The information-processing device 1 obtains the omnidirectional image data 14A from the imaging device 2 including a wide angle lens (such as a fish-eye lens) capable of capturing pictures for the omnidirectional image, or from the external memory device 3 in which the omnidirectional image data 14A is stored. In addition, the information-processing device 1 is capable of generating new image data which is expected by the user from the obtained omnidirectional image data 14A. Furthermore, in the following descriptions, the generation of the new image data from the omnidirectional image data is called "re-video", and the generated image data is called "re-video data".

As shown in FIG.1, the information processing unit 1 includes the communication unit 11, the input-instruction receipt unit 12, the control unit 13, the memory unit 14, and the display unit 15. In addition, the information processing unit 1 is composed in a personal computer. Furthermore, as shown in FIG.1, the control unit 13 includes the viewing-angle changing unit 16, the unfold method changing unit 17, the memory processing unit 18, and the re-video data generation processing unit 19. Furthermore, as shown in FIG.1, the memory unit 14 is utilized to store the omnidirectional image data 14A, the viewing-angle changing data 14B, the unfold method changing data 14C, the video time data 14D, the video time relating data 14E, and the re-video data 14F.

The communication unit 11 performs the communication with the imaging device 2 capable of capturing pictures for the omnidirectional image, or with the external memory device 3 storing the omnidirectional image data 14A. For example, the communication unit 11 is composed of a USB inter-communication connector or a wireless communication module corresponding to WiFi (Wireless Fidelity) or NFC, and it obtains the omnidirectional data 14A from the imaging device 2 or the external memory device 3.

The input-instruction receipt unit 12 is utilized to receive various instructions from the user. For example, selection items or icons are displayed in the display unit 15. The users operate the keyboard and the mouse and so on such that the input instruction can be received by the operation. In addition, the input-instruction receipt unit 12 could be embedded with the display unit 15 which is a touch panel as illustrated later. For example, the input-instruction receipt unit 12 can receive the starting and ending of the re-video processing, or the changing of the setting condition for the re-video (the detail will be illustrated later). Various instruction signals received by the input-instruction receipt unit 12 are provided to the control unit 13.

The control unit 13 is equipped with the CPU controlling the overall operation of the information processing unit 1, the ROM storing the basic input/output program, and the RAM utilized for the working area of the CPU. The control unit 13 expends the exclusive program (not shown) in the RAM, and the exclusive program is utilized to generate the re-video data 14F which is stored in the ROM or the memory unit 14 illustrated later. In addition, the control unit 13 implements various functions of the viewing-angle changing unit 16, the unfold method changing unit 17, the memory processing unit 18, and the re-video data generation processing unit 19.

The memory unit 14 is composed of an HDD (Hard Disk Drive) or an SSD (Solid State Drive) to execute the reading and writing of the data according to the control of the CPU. The memory unit 14 not only stores the omnidirectional image data 14A, the viewing-angle changing data 14B, the unfold method changing data 14C, the video time data 14D, the video time relating data 14E, and the re-video data 14F, but it also stores the OS for operations of the CPU, other programs, and various kinds of data.

The display unit 15 is the display of liquid crystal or organic EL to display icons for executing still images, dynamic images and various operations based on the omnidirectional image data 14A. Furthermore, the display unit 15 could include a touch panel and is utilized for a portion of the input-instruction receipt unit 12.

The viewing-angle changing unit 16 receives the viewing-angle changing instruction of the input-instruction receipt unit 12, and changes the viewing angle when the omnidirectional image data 14A is displayed in the display unit 15.

The unfold method changing unit 17 receives the unfold method changing instruction of the input-instruction receipt unit 12, and changes the unfold method when the omnidirectional image data 14A is displayed in the display unit 15.

The memory processing unit 18 stores various instructions received from the input-instruction receipt unit 12 in the memory unit 14. For example, the memory processing unit 18 receives the viewing-angle changing instruction and the unfold method changing instruction of the input-instruction receipt unit 12, and stores the viewing-angle changing data 14B for illustrating the content of the viewing-angle changing instruction, and the unfold method changing data 14C for illustrating the content of the unfold method changing instruction in the memory unit 14. Furthermore, the memory processing unit 18 stores the video time data 14D in the memory unit 14 about the reproduction time of the omnidirectional image data 14A at the timing of receiving various instructions. Furthermore, the memory processing unit 18 could also save the video time data 14D and the video time relating data 14E in the memory unit 14, and the video time relating data 14E belongs to the frame number of the related image at the video time in compensation for the video time data 14D.

The re-video data generation processing unit 19 receives the generating instruction of the re-video data 14F of the input-instruction receipt unit 12, and it generates the re-video data 14F based on the omnidirectional data 14A and the data illustrating various changing instructions stored in the memory unit 14 by the memory processing unit 18. The re-video data generation processing unit 19 stored the generated re-video data 14F in the memory unit 14.

### The generation processing of the re-video data

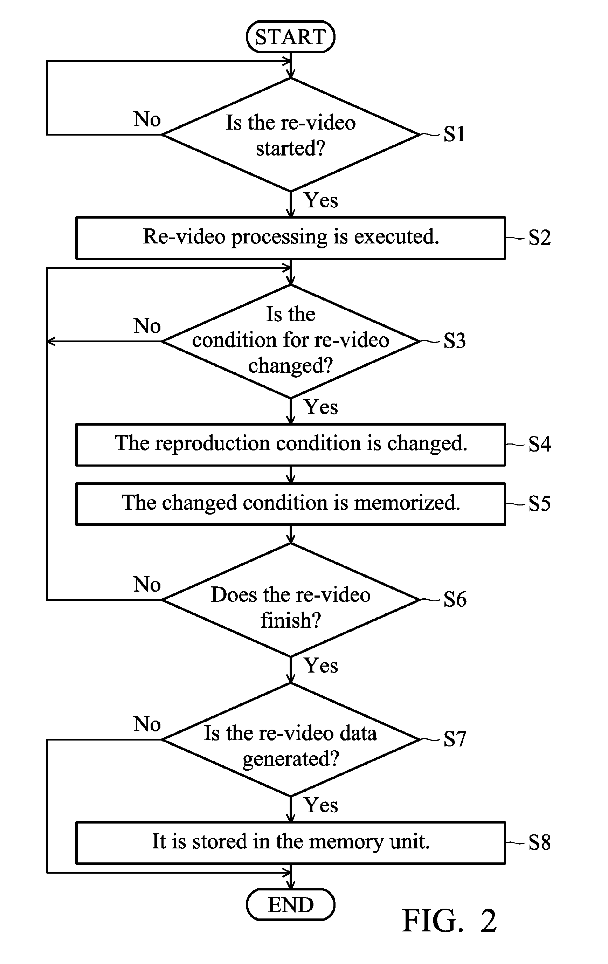

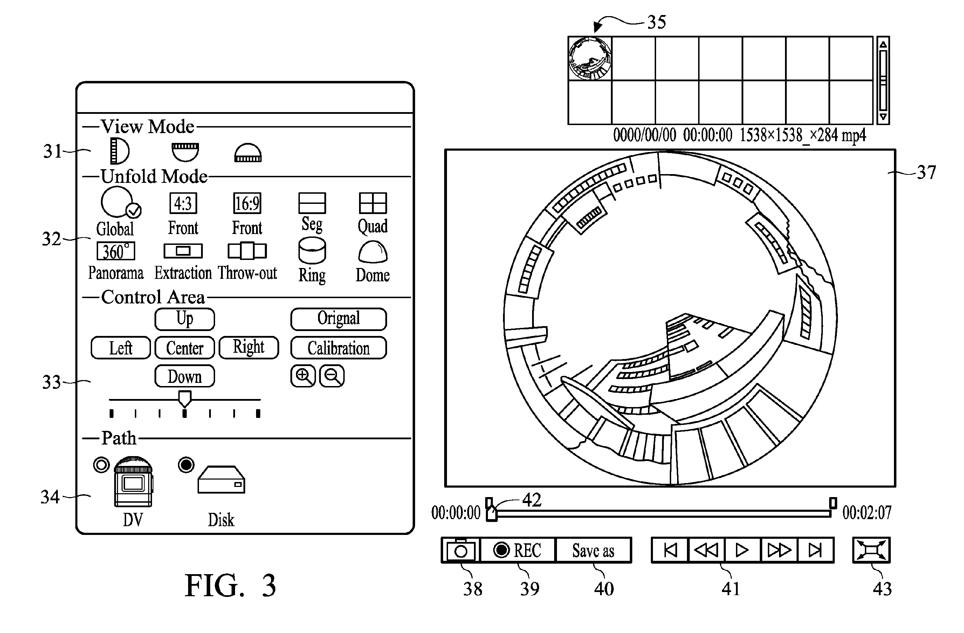

FIG.2 is a flowchart illustrating the generation processing of the re-video data by the control unit 13 of the information-processing device 1 shown in FIG.1. FIG.3 is an example of an image illustrated in the display unit 15 when the re-video process of FIG.2 is performed.

START: The CPU of the control unit 13 reads the non-illustrating program from ROM in order to generate the re-video data, and expands it in the RAM (for example, as shown in the picture of FIG.3 illustrated by display unit 15 of the information processing unit 1). Accordingly, users can implement the possible states for starting the re-video processing of the omnidirectional image data 14A. Afterwards, users can see the images displayed in the display unit 15 and set the re-video conditions of the omnidirectional image data 14A. Furthermore, such re-video conditions could include the enlarging/shrinking rate, the viewing angle, the expansion mode (global, front, two-partition, four-partition, panorama, ring, dome), and the display mode (the direction of the imaging device) of the omnidirectional image data 14A, for example.

STEP S1: The control unit 13 of the information-processing device 1 determines whether the re-video processing has been initiated or not. For example, corresponding to the "REC" button pressed by the user as shown in the picture of FIG.3, the re-video processing is initiated according to the re-video conditions set by the user. Furthermore, if the reproduction processing of the omnidirectional image data 14A has already been executed when the "REC" button is pressed, the re-video processing is initiated from the ongoing reproduction. If the reproduction processing was not initiated when the "REC" button was pressed, the reproduction processing is executed according to the re-video conditions from the initial omnidirectional image data 14A, and the re-video processing is initiated at the same time.

STEP 2: When it is determined that the re-video processing has been initiated (YES at step S1), the re-video processing for the omnidirectional image data 14A is initiated by the control unit 13. Furthermore, based on the re-video settings, the reproduction processing of the omnidirectional image data 14A is also initiated at the same time. Furthermore, according to the re-video settings, when the re-video processing is initiated, it is stored in the memory unit 14 by the memory processing unit 18.

STEP 3: The control unit 13 determines whether or not the re-video settings have been changed by the user. More specifically, the control unit 13 determines whether or not there are changing instructions, such as a change in the view-point mode of the omnidirectional image data 14A, a change in the unfold method, a change in the viewing angle, or a change in the enlarging/shrinking rate through the input-instruction receipt unit 12 by the user.

STEP 4: When the control unit 13 determines that the condition for the re-video is changed (YES in step S3) on the determination of step S3, the reproduction condition is also changed to correspond to the changed condition. Accordingly, users can confirm the change from the condenser, which is currently reproduced.

STEP 5: When the re-video condition and the reproduction condition are changed in the steps S3 and S4, the control unit 13 (the memory processing unit 18) stores the changed content in the memory unit 14.

STEP 6: The control unit 13 determines whether the re-video processing is finished or not. For example, the control unit 13 determines that the re-video processing has finished when the ceasing instruction for reproduction processing or the ceasing instruction for the re-video processing inside the frame is made by the user. In addition, even there are no such instructions, when there are ceasing requirement instructions from the re-video data generation processing unit 19, the finishing of the re-video processing is determined.

STEP 7: When the generation processing requirement of the re-video data 14F from users exists (for example, the button of "SAVE AS" of FIG.3 is pressed ), the control unit 13 (the re-video data generation processing unit 19) generates the re-video data 14F based on the omnidirectional image data 14A and the re-video condition stored in the memory unit 14 on step S5.

STEP 8: The control unit 13 (the re-video data generation processing unit 19) stores the re-video data 14F which is generated in step S7 in the memory unit 14, and the processing finishes (END).

FIG.3 to FIG.6 illustrate embodiments of the frames displayed in the display unit 15 when the re-video processing of FIG.2 is executed. The view mode selection region 31 for selecting view modes, the unfold method selection region 32 capable of selecting the unfold method, the display area adjusting region 33 capable of operating the display area (the viewing angle region), and the connecting terminal selection region 34 capable of selecting a communication machine or a connecting machine for obtaining the omnidirectional data 14A are included in the left side of the illustrating frames of FIG.3 to FIG.6. In addition, the right side of the illustrating frame includes the data selection region 35, the reproduction frame-display region 37, the still picture video button 38, the re-video start instruction/pause button 39, the re-video data store button 40, the reproduction-condition changing button 41 such as reproduction, pausing, fast forward and rewinding, and the total-frame illustration button 43. Furthermore, each icon or selection item illustrated in FIG.3 to FIG.6 is an example of the input-instruction receipt unit 12.

The view mode selection region 31 includes icons capable of selecting the direction of the imaging device 2. Directions of the imaging device 2 could be transverse-forward, down-forward or up-forward. Users can select the icon illustrating the lens direction of the imaging device 2 corresponding to such directions. The view point when the re-video is executed or the reproduction of the omnidirectional data 14A can be assigned according a selection by the user.

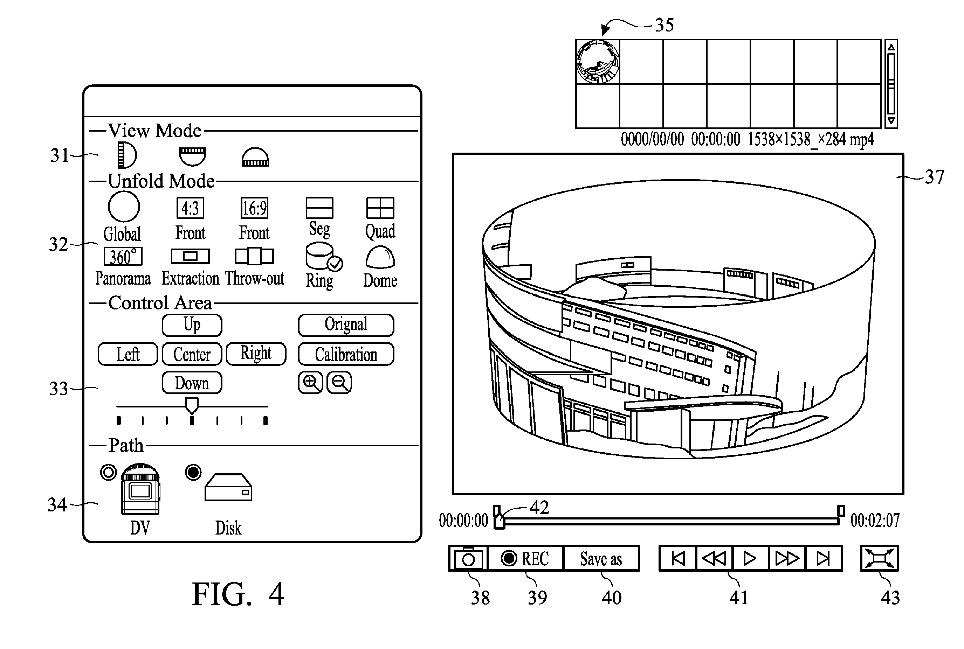

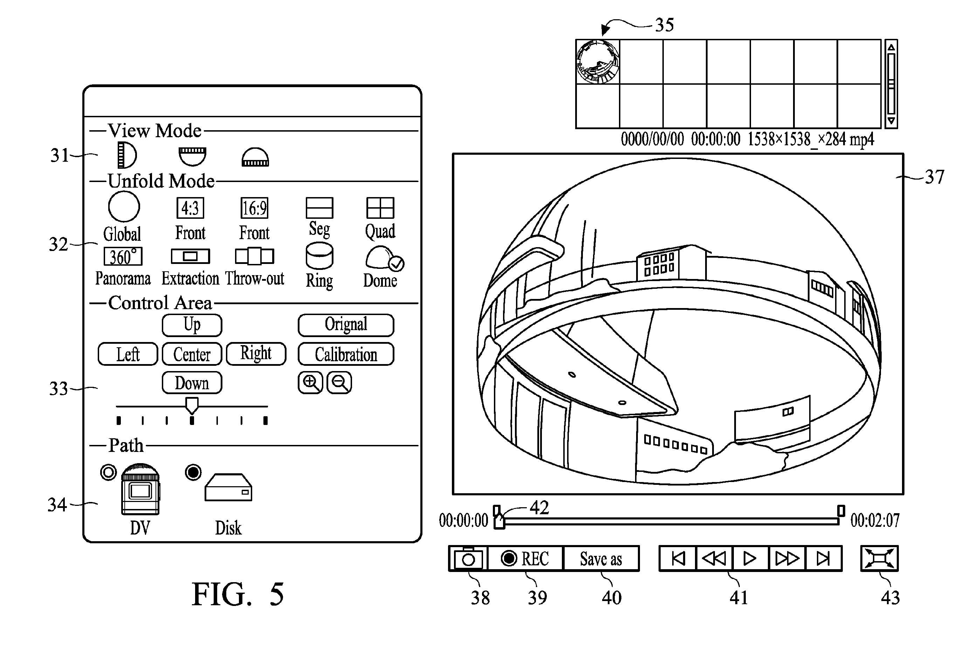

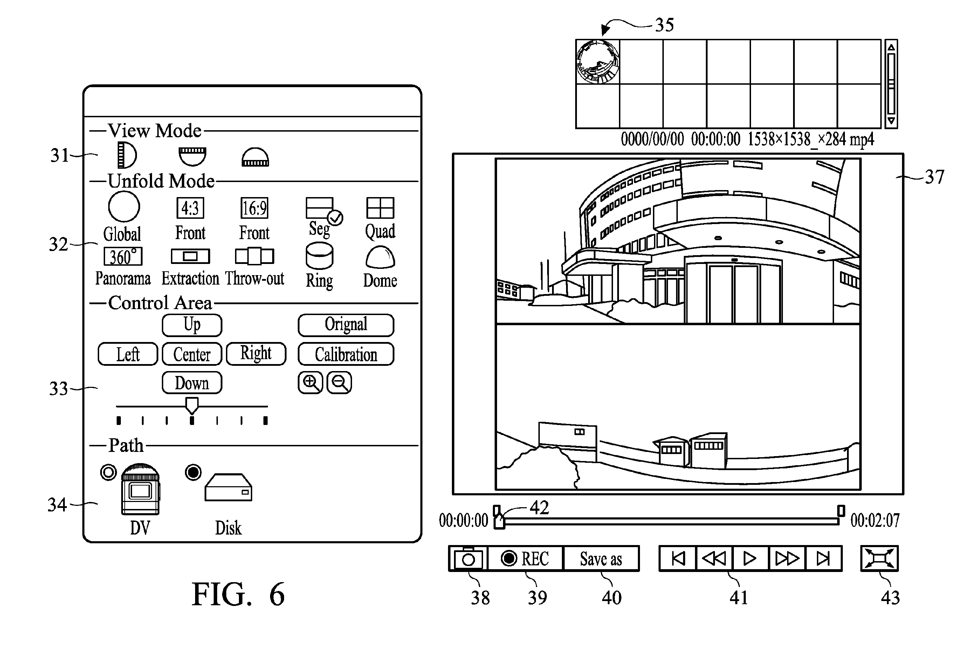

The unfold method selection region 32 includes icons for selecting the unfold methods of the omnidirectional data 14A. Because the omnidirectional data 14A is a sphere-type image data which is obtained by the imaging device 2 capable of omnidirectional (360-degree) imaging, it is necessary for the user to select the unfolding with a certain shape. As shown in FIG.3, the selecting icon for the unfold processing method includes the icon illustrating the picture of the omnidirectional sphere (Global), the icon illustrating the unfold processing method with the aspect ratio of 4:3 (Front, 4:3), the icon illustrating the unfold processing method with the aspect ratio of 16:9 (Front, 16:9), the icon illustrating the unfold processing method of two partitions in the vertical direction (Seg), the icon illustrating the unfold processing method of four partitions (Quad), the icon illustrating the unfold processing method with a 360-degree transverse picture (Panorama), the icon illustrating the unfold processing method which enlarges the central portion or a part of region of the panorama picture (Extraction, Throw-out), the icon illustrating the unfold processing method of the ring shape (Ring), and the icon illustrating the unfold processing method with a dome shape (Dome). In the embodiment of FIG.3, the icon illustrating the picture of the omnidirectional sphere (Global) is selected. The icon for the ring shape is selected in FIG.4, the icon for the dome shape is selected in FIG.5, and the icon for the two partitions in the vertical direction is selected in FIG.6. In addition, the unfold processing method for the omnidirectional image data 14A may not be equipped with all of the unfold processing methods as shown in the embodiment. It there are other unfold processing methods (not shown), such methods could also be added.

The display area adjusting region 33 includes icons for the user to assign various instructions such as the changing of the viewing angle area of the image data which is composed of re-videoing or reproducing images in the reproduction frame-display region 37, and the enlarging or shrinking of an image inside the displayed frame.

The connecting terminal selection region 34 is utilized for obtaining the omnidirectional data 14A, and it includes interfaces for selecting either the imaging device 2 or the external memory device 3.

For example, the data selection region 35 displays the thumbnail images of the omnidirectional data 14A stored in the imaging device 2 or the external memory device 3 which are the connecting terminal or the communication terminal of the information-processing device 1. In the embodiment of FIG.3, only one image data is displayed. However, when a plurality of omnidirectional data 14A is stored, their thumbnail images can be displayed.

The reproduction frame-display region 37 displays the images implemented by the view point, the unfold processing, and the enlarging/shrinking corresponding to the reproduction condition of the omnidirectional data 14A. In addition, the initial image data 14A is displayed by the reproduction frame-display region 37 according to the unfold processing method which is set for imaging. However, the initial display could also be executed by the unfold processing method which is already set in the unfold method selection region 32.

The still picture video button 38 is a button utilized to generate the specific still image data from images displayed by the reproduction frame-display region 37.

The re-video start instruction/pause button 39 is a button utilized to indicate the starting or pausing of the re-video.

The re-video data store button 40 is a button utilized for storing the re-video data 14F in the memory unit 14, and the re-video data 14F is newly generated based on the re-video condition stored in the memory unit 14.

The reproduction-condition changing button 41 is utilized for indicating the reproduction, pausing, fast forwarding and rewinding of the dynamic pictures displayed in the reproduction frame-display region 37. In addition, the reproduction-condition changing button 41 could be utilized for changing the reproduction conditions of the usual dynamic images. The content of the re-video data 14 can also be reproduced in the reproduction frame-display region 37 when the re-video data 14F is currently generated, the re-video is paused, and until the re-video data store button 40 is pressed.

The reproduction-point indicating arrowhead 42 is a pattern arrowhead to indicate the position of the video time for the reproduction or the re-video. Users can initiate a reproduction or re-video from the expected video time by moving the reproduction-point indicating arrowhead 42.

The total-frame illustration button 43 is utilized for extending and displaying the dynamic images displayed in the reproduction frame-display region 37 in the total frame of the display unit 15.

Through the displaying frames as illustrated in FIG.3, users can assign the omnidirectional data 14A for re-video, and execute the operations of preferred view points, unfold methods, and viewing angle regions. The operational intention of the user can be smoothly reflected.

As illustrated above, the information-processing device 1 includes the control unit 13 for displaying an omnidirectional image data 14A by an unfold image which is unfolded with one of at least two unfold methods (the display control operation), the viewing angle change processing unit 16 for changing a viewing-angle position of the unfold image (the viewing-angle position-changing operation), the unfold method change processing unit 17 for changing an unfold method of the unfold image (the unfold-method changing operation, the memory unit 18 to store the viewing-angle changing data 14B (the viewing-angle position information) changed by the viewing angle change processing unit 16, the unfold method changing data 14C (the unfold-method information) changed by the unfold method change processing unit 17, the video time data 14D (the video time information) changed accordingly or the video time relating data 14E (video time relating information); and the re-video data generation processing unit 19 for generating the re-video data 14F (image data) from the omnidirectional data 14A based on the information stored in the memory unit 14. As such, the information-processing device 1 stores the changing information of the image string which is displayed by a plurality of unfold methods in the memory unit 14. Afterwards, when the re-video data 14F is generated, since the changing can be reflected, the image data reflecting the intention of the user can be generated easily, which appears by utilizing various unfold methods. Furthermore, since the image data reflecting the intention of the user by the information-processing device 1 can be individually generated with the omnidirectional image data 14A, the dynamic image reproduction software which is specific for utilizing the audiovisual history could not be utilized, and the general dynamic image reproduction software can be utilized for easy reproduction.

In addition, the information-processing device 1 receives a reproduction instruction from a user by the input-instruction receipt unit 12, and the re-video data 14F generated from the omnidirectional data 14A can be reproduced. Accordingly, the self-reproduction of the outcome of the re-video data 14F which is obtained by setting the reproduction condition can be confirmed.

In addition, the information-processing device 1 receives a video instruction from a user by the input-instruction receipt unit 12, and the re-video data 14F can be stored in the memory unit 14 by the memory processing unit 18. Accordingly, the re-video data 14F generated by setting the reproduction condition can be maintained as other image data with the omnidirectional data 14A. If the general dynamic image reproduction software is utilized and reproduced, the audiovisual operation can be easily performed.

As such, the generation processing of the re-video data which is executed by the above information-processing device 1 (the information-processing method) and the program installed in the information-processing device 1 can be utilized in the same way as the information-processing device 1. The changing information of the image string which is displayed by a plurality of unfold methods in the memory unit 14 is stored. Afterwards, when the re-video data 14F is generated, since the changing can be reflected, the image data reflecting the intention of the user can be easily generated which appears by utilizing various unfold methods. Furthermore, since the image data reflecting the intention of the user by the information-processing device 1 can be individually generated with the omnidirectional image data 14A, the dynamic image reproduction software which is specific for utilizing the audiovisual history could not be utilized, and the general dynamic image reproduction software can be utilized for easy reproduction. In other words, the generation processing of the re-video data which is executed by the above information-processing device 1 (the information-processing method) and the program installed in the information-processing device 1 provide the same effect as that of the information-processing device 1.

Various amendments are available in the above illustrated embodiments. For example, the imaging device 2 could include wide-angle lens capable of the video for the omnidirectional image, or it could be an imaging device which is not capable of the video for the omnidirectional (360-degrees) image. Similarly, the omnidirectional data 14A could include the viewing angle region of the omnidirection (360 degrees) for illustration, or it could be the image data without the viewing angle region of the omnidirection.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements. While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An information-processing device (1), **characterized by**:
an imaging device (2) obtaining a first image data, wherein the information-processing device comprises a communication unit (11), an input-instruction receipt unit (12), a control unit (13), a storing unit (14), an image-data generating unit and a display unit (15);
the information-processing device displays the first image data obtained by the imaging device on the display unit;
the communication unit, executing communication for the imaging device or the storing unit;
the input-instruction receipt unit, receiving an input instruction by a user through the control unit, forming an input-instruction information and storing the input-instruction information on the storing unit; and
the image-data generating unit, generating a second image data from the first image data with the input-instruction information stored in the storing unit, and storing in the storing unit or an external storing unit through the input-instruction receipt unit.

2. The information-processing device as claimed in claim 1, wherein the communication unit has wireless-communication technology.

3. The information-processing device as claimed in claim 1 or 2, wherein the display unit displays the first image data through an unfold method of at least two unfold methods.

4. The information-processing device as claimed in any of the claims 1 to 3, wherein the control unit comprises:
an unfold-method changing unit, changing unfold method of the first image data; and
a viewing-angle position-changing unit, changing viewing-angle position of the first image data.

5. The information-processing device as claimed in any of the claims 1 to 4,
wherein the control unit comprises:
a video-instruction receipt unit, receiving video-instruction of a user;
a play-instruction receipt unit, receiving play-instruction of a user; and
a play unit, playing the second image data when the play-instruction receipt unit receives the play-instruction of the user.

6. The information-processing device as claimed in any of the claims 2 to 5,
wherein the control unit comprises:
a video-instruction receipt unit, receiving video-instruction of a user;
a play-instruction receipt unit, receiving play-instruction of a user; and
a play unit, playing the second image data when the play-instruction receipt unit receives the play-instruction of the user.

7. The information-processing device as claimed in any of the claims 3 to 6,
wherein the control unit comprises:
a video-instruction receipt unit, receiving video-instruction of a user;
a play-instruction receipt unit, receiving play-instruction of a user; and
a play unit, playing the second image data when the play-instruction receipt unit receives the play-instruction of the user.

8. The information-processing device as claimed in any of the claims 4 to 7,
wherein the control unit comprises:
a video-instruction receipt unit, receiving video-instruction of a user;
a play-instruction receipt unit, receiving play-instruction of a user; and
a play unit, playing the second image data when the play-instruction receipt unit receives the play-instruction of the user.

9. An information-processing method, **characterized by**:
an imaging device obtaining a first image data, wherein information-processing method has the information-processing device which comprises a communication unit, an input-instruction receipt unit, a control unit, a storing unit, an image-data generating unit and a display unit, the information-processing device displays the first image data obtained by the imaging device on the display unit, and the information-processing method comprises:
a communication step, executing communication for the imaging device or the storing unit by the communication unit;
an input-instruction receipt step, receiving an input instruction by a user through the control unit, forming an input-instruction information and storing the input-instruction information on the storing unit by the input-instruction receipt unit; and
an image-data generating step, generating a second image data from the first image data based on the input-instruction information stored in the storing unit, and storing in the storing unit or an external storing unit through the input-instruction receipt unit by input-instruction receipt unit.

10. The information-processing method as claimed in claim 9, wherein the information-processing method comprises a video-instruction receipt step for executing video-instruction by a user through a video-instruction receipt unit.

11. The information-processing method as claimed in claim 9 or 10, wherein the information-processing method comprises a play-instruction receipt step for executing play-instruction by a user through a play-instruction receipt unit and playing the second image data when the play-instruction receipt unit receives the play-instruction through the play unit.

12. The information-processing method as claimed in any of the claims 9 to 11, wherein the information-processing method comprises a unfold-method changing step for changing unfold method of the first image data by a user through an unfold-method changing unit.

13. The information-processing method as claimed in any of the claims 9 to 12, wherein the information-processing method comprises a viewing-angle position-changing step for changing viewing-angle position of the first image data by a user through a viewing-angle position-changing unit.
